# EUROPÄISCHE PATENTSCHRIFT

(11) **EP 2 759 446 B1**
(45) Veröffentlichungstag und Bekanntmachung des Hinweises auf die Patenterteilung: **25.05.2016**
(21) Anmeldenummer: 14152778.8
(22) Anmeldetag: 28.01.2014
(51) Int. Cl.: B60R 1/074, F16D 7/04

(54) **Elektrisch rotatorische Verstelleinheit, insbesondere für indirekte Sichtsysteme für Fahrzeuge**
Electrically rotational adjusting unit, especially for indirect visual systems for vehicles
Unité de réglage à rotation électrique, notamment pour des systèmes de vision indirecte pour véhicules

(30) Priorität: 29.01.2013 DE 102013201434
(43) Veröffentlichungstag der Anmeldung: 30.07.2014
(73) Patentinhaber: MEKRA LANG GmbH & Co. KG, 91465 Ergersheim (DE)
(72) Erfinder: Lang, Werner, 91465 Ergersheim (DE); Finkenberger, Elmar, 91587 Adelshofen (DE); Popp, Albrecht, 91629 Weihenzell (DE); Centmayer, Stefan, 91465 Ergersheim (DE)
(74) Vertreter: Winter, Brandl, Fürniss, Hübner, Röss, Kaiser, Polte - Partnerschaft mbB

(56) Entgegenhaltungen:
- EP-A2- 0 881 124
- EP-A2- 1 129 907
- EP-A2- 1 908 635
- US-A1- 2008 149 803

## Beschreibung

Die Erfindung betrifft eine elektrisch rotatorische Verstelleinheit, insbesondere für indirekte Sichtsysteme für Fahrzeuge gemäß dem Oberbegriff des Anspruchs 1.

Elektrisch rotatorische Verstelleinheiten zum Einklappen und/oder Verstellen von indirekten Sichtsystemen an Fahrzeugen sind beispielsweise aus der EP 1 755 923 B1, der DE 199 53 484 C2 und der EP 2 436 559 A1 bekannt. Bei diesen Verstelleinheiten ist der elektrische Drehantrieb zwischen einem Basisteil und einem zu drehenden Teil angeordnet, so dass der elektrische Drehantrieb für die Übertragung und Aufnahme der zwischen Basisteil und zu drehendem Teil wirkenden Kräfte und Momente ausgelegt werden muss. Folglich ergeben sich vergleichsweise große und schwere Komponenten und damit eine vergleichsweise große und schwere elektrisch rotatorische Verstelleinheit.

Aus EP 1 129 907 A2, die den Oberbegriff des Anspruchs 1 bildet, ist eine elektrisch-rotatorische Verstelleinheit, insbesondere für indirekte Sichtsysteme in Fahrzeugen mit folgenden Merkmalen bekannt. Ein Basisteil, einem zu drehenden Teil, das axial gelagert ist, einem mit dem Basisteil verbundenen Drehantrieb, der mit dem zu drehenden Teil koppelbar ist, um das zu drehende Teil elektromotorisch zu verdrehen, wobei zwischen Basisteil und zu drehendem Teil eine Kupplungsvorrichtung vorgesehen ist.

Ausgehend von der EP 1 120 907 A2 ist es daher Aufgabe der vorliegenden Erfindung eine elektrisch rotatorische Verstelleinheit, insbesondere für indirekte Sichtsysteme von Fahrzeugen anzugeben, die klein erbaut und leichtere Komponenten ermöglicht.

Die Lösung dieser Aufgabe erfolgt durch die Merkmale des Anspruchs 1.

Durch das Vorsehen einer Kupplungsvorrichtung, die in Nullstellung, bei der der elektrische Drehantrieb desaktiviert ist, Basisteil und zu drehendes Teil drehfest miteinander koppelt und dem elektrischen Drehantrieb von dem zu drehenden Teil entkoppelt und bei Aktivierung des elektrischen Drehantrieb Basisteil und zu drehendes Teil voneinander entkoppelt und den elektrischen Drehantrieb mit dem zu drehenden Teil koppelt wird erreicht, dass die im Einsatz auftretenden Kräfte und Momente direkt zwischen Basisteil und zu drehendem Teil über die Kupplungsvorrichtung übertragen werden. Diese direkte und unmittelbare Kopplung zwischen Basisteil und zu drehendem Teil wird nur dann aufgehoben, wenn der elektrische Drehantrieb zum Beispiel zum Abklappen eines Spiegels in eine Parkposition aktiviert wird. Der elektrische Drehantrieb wird nur für kurze Zeit oder für eine Zeitdauer aktiviert, während der dafür Sorge getragen werden kann, dass keine übergroßen Kräfte auf Basisteil und zu drehendes Teil einwirken. Folglich kann der elektrische Drehantrieb entsprechend klein und für vergleichsweise geringe Kräfte und Momente ausgelegt werden.

Gemäß der vorteilhaften Ausgestaltung der Erfindung nach Anspruch 2 umfasst die Kupplungsvorrichtung erste Kupplungselemente sowie wenigstens ein Entkupplungselement, das an dem zu drehenden Teil angeordnet ist. An dem Basisteil sind zugeordnete zweite Kupplungselemente vorgesehen, wobei die ersten und zweiten Kupplungselemente bei Kopplung von Basisteil und zu drehendem Teil miteinander in Eingriff stehen. Das Abtriebteil weist eine Geoetrie auf, die bewirkt, das bei Betätigung des elektrischen Drehantriebs die beiden Kupplungselemente voneinander getrennt werden, so dass Basisteil und zu drehendes Teil voneinander entkoppelt werden.

Gemäß der vorteilhaften Ausgestaltung der Erfindung nach Anspruch 3 ist das wenigstens eine Entkupplungselement eine Entkupplungszapfen und das wenigstens eine Mitnehmerelement ist ein Mitnehmerzapfen. Bei Betätigung des elektrischen Drehantriebs gleiten die Entkupplungszapfen an den schrägverlaufenden Abschnitten entlang und drücken damit Abtriebteil und zu verdrehendes Teil in axialer Richtung auseinander, so dass die beiden Kupplungselemente voneinander getrennt und Basisteil und zu drehendes Teil voneinander entkoppelt werden. Anstelle von schräg verlaufenden Abschnitten ist auch eine V-förmig verlaufende Nut denkbar in der ein Entkuppflungszapfen mit halbkugelförmigem Ende entlang gleitet und so den Abstand zwischen Abtriebteil und zu drehendem Teil vergrößert und die beiden Kupplungselement voneinander trennt.

Durch die vorteilhafte Ausgestaltung der Erfindung nach Anspruch 4 wird in der Nullstellung die Kopplung zwischen Basisteil und zu drehendem Teil aufrechterhalten und die Entkopplung bei Aktivierung des elektrischen Drehantriebs kann nur gegen den Widerstand des Federelements bzw. des elastischen Elements erfolgen.

Anspruch 5 hat eine vorteilhafte und einfache Ausgestaltung der beiden Kupplungselemente in Form einer Klauenkupplung zum Gegenstand.

Die ringförmige Ausgestaltung des Abtriebselements gemäß Anspruch 6 bietet sich für Drehbewegungen in vorteilhafter Weise an.

Durch die vorteilhafte Ausgestaltung der Erfindung nach Anspruch 7 mit einer Mehrzahl von , vorzugsweise drei, Mitnehmerzapfen und einer Mehrzahl von schräg verlaufenden Abschnitten wird eine stabile Konstruktion ermöglicht, bei der keine Kippmomente auftreten. Dies gilt insbesondere dann, wenn jedem Mitnehmerzapfen an dem Abtriebteil ein Entkupplungszapfen an dem zu drehenden Teil zugeordnet ist.

Durch die vorteilhafte Ausgestaltung der Erfindung nach Anspruch 8 wird erreicht, dass die einzelnen Komponenten mit geringeren Fertigungstolleranzen gefertigt werden müssen. Durch die Plateaufläche bewegt sich das Abtriebteil erst um einen kleinen Winkel bevor der Entkopplungszapfen der schräg verlaufenden Abschnitt erreicht wird und der Entkopplungsvorgang beginnt.

Durch die vorteilhafte Ausgestaltung der Erfindung nach Anspruch 9 wird es möglich, dass bei Desaktivierung des elektrischen Drehantriebs der Entkopplungszapfen an der Schrägfläche durch die Federkraft des elastischen Elements wieder nach unten gleitet und die beiden Kupplungselemente selbsttätig wieder in Eingriff gelangen. Somit gelangt die Verstelleinheit selbsttätig wieder in Nullstellung, d.h. Basisteil und zu drehender Teil sind miteinander drehfest gekoppelt.

Durch die vorteilhafte Ausgestaltung der Erfindung nach Anspruch 10 ein zur Verstellung z. B. eines Spiegels ausreichendes Drehmoment zur Verfügung gestellt und gleichzeitig wird ein geringes Bauvolumen ermöglicht. Zudem kann auf vorhandene gängige Komponenten - Wolfrom-Planetengetriebe - zurückgegriffen werden.

Durch die vorteilhafte Ausgestaltung der Erfindung nach Anspruch 11 wird ermöglicht, dass bei Desaktivierung des elektrischen Antriebs die beiden Kupplungselemente durch das elastische Element wieder in Eingriff gelangen.

Durch die vorteilhafte Ausgestaltung der Erfindung nach Anspruch 12 wird das Ein- und Auskuppeln der beiden Kupplungselemente unterstützt. Durch die schrägen Flanken der trapezförmigen Kupplungselemente gleiten die Entkupplungselemente leichter ineinander oder auseinander.

Durch die vorteilhafte Ausgestaltung der Erfindung nach Anspruch 13 wird der maximale Drehwinkel definiert, d.h. der Winkel bei dem z.B. ein Spiegel vollständig eingeklappt ist.

Durch die vorteilhafte Ausgestaltung der Erfindung nach Anspruch 14 wird die Erreichung dieses maximalen Drehwinkels bzw. des Anschlags durch die Überwachung der von dem elektrischen Drehantrieb aufgenommenen Stromstärke detektiert. Bei Erreichen des Anschlags steigt die Stromstärke an und dies kann durch eine Sensor- und Steuervorrichtung erfasst werden. Ist dies der Fall, wird die Drehrichtung kurz umgedreht, so dass die beiden Kupplungselemente wieder in Eingriff gelangen können.

Durch die vorteilhaften Ausgestaltungen der Erfindung nach Anspruch 15 sind die ersten und zweiten Kupplungselemente so ausgelegt, dass erst bei Verdrehung um einen bestimmten Winkel die Kupplungselemente wieder ineinandergreifen können. Hierdurch wird ein minimaler Verdrehwinkel zwischen zwei Nullstellungen festgelegt.

Gemäß der vorteilhaften Ausgestaltung der Erfindung nach den Ansprüchen 16 und 17 wird das Erreichen dieses bestimmten Winkels ψ dadurch erfasst, dass die verringerte Stromaufnahme des elektrischen Drehantriebs bei Erreichen der Stellung bei der die Kupplungselemente wieder ineinander eingreifen können, erfasst wird.

Die vorteilhafte Ausgestaltung der Erfindung nach den Ansprüchen Anspruch 18 bis 22 ergibt sich eine einfache Montage und eine kompakte Bauform.

Durch die vorteilhafte Ausgestaltung der Erfindung nach Anspruch 23 wird ermöglicht, dass die Vorrichtung bei Einwirkung von übermäßigen Kräften z.B. bei Kollision mit einem Hindernis selbsttätig in die Abklappstellung gelangt.

Als elektrischer Drehantrieb kann auch ein Schrittmotor verwendet werden, der das Abtriebteil direkt oder auch über ein Getriebe antreibt. Bei direktem Antrieb ohne Getriebe, kann der Schrittmotor anstelle des Getriebes direkt in dem rohrförmigen Basisteil angeordnet werden.

Weitere Einzelheiten, Merkmale und Vorteile der Erfindung ergeben sich aus der nachfolgenden Beschreibung bevorzugter Ausführungsformen anhand der Zeichnungen.

Es zeigt:
Fig. 1 eine Explosionsdarstellung einer beispielhaften ersten Ausführungsform der Erfindung,
Fig. 2 zeigt eine Aufsicht auf die erste Ausführungsform der Erfindung,
Fig. 3a einen Schnitt entlang A-A in Fig. 2 in gekoppeltem Zustand (Nullstellung),
Fig. 3b einen Schnitt entlang A-A in entkoppelten Zustand (elektrischer Drehantrieb aktiv),
Fig. 4 einen Schnitt entlang B-B in Fig. 2,
Fig. 5 zeigt eine perspektivische Darstellung der ersten und zweiten Kupplüngselemente der ersten Ausführungsform,
Fig. 6 zeigt die Stromaufnahme des elektrischen Drehantriebs als Funktion des Drehwinkels bei einem selbsthemmenden Getriebe und einem Abtriebteil gemäß Fig. 1,
Fig. 7 zeigt eine alternative Ausgestaltung des Abtriebteils gemäß einer zweiten Ausführungsform der Erfindung für eine selbsttätige Kopplung von Basisteil und zu drehendem Teil aufgrund einer Federvorspannung, und
Fig. 8 zeigt die Stromaufnahme des elektrischen Drehantriebs als Funktion des Drehwinkels bei einem nicht selbsthemmenden Getriebe mit einem Abtriebteil gemäß Fig. 7.

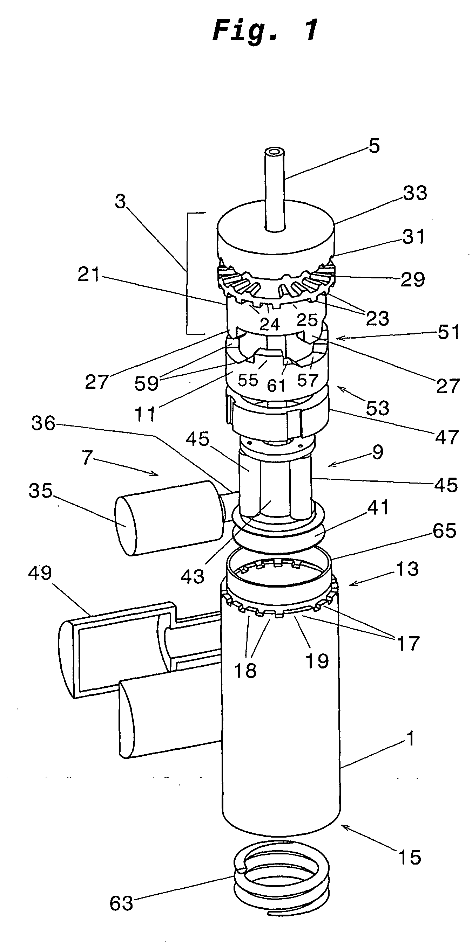

Die in Fig. 1 gezeigte Explosionsdarstellung der ersten Ausführungsform der Erfindung umfasst ein Basisteil 1 und ein zu drehendes Teil 3, das auf einem Achselement 5 drehbar angeordnet ist. Das Achselement 5 ist in dem Basisteil 1 gelagert. Das Basisteil 1 ist mit einem elektrischen Drehantrieb 7 verbunden, der ein Wolfrom-Getriebe 9 umfasst, dass von dem Achselement 5 durchsetzt wird. Das Wolfrom-Getriebe 9 treibt ein ringförmig ausgestaltetes Abtriebselement 11 an.

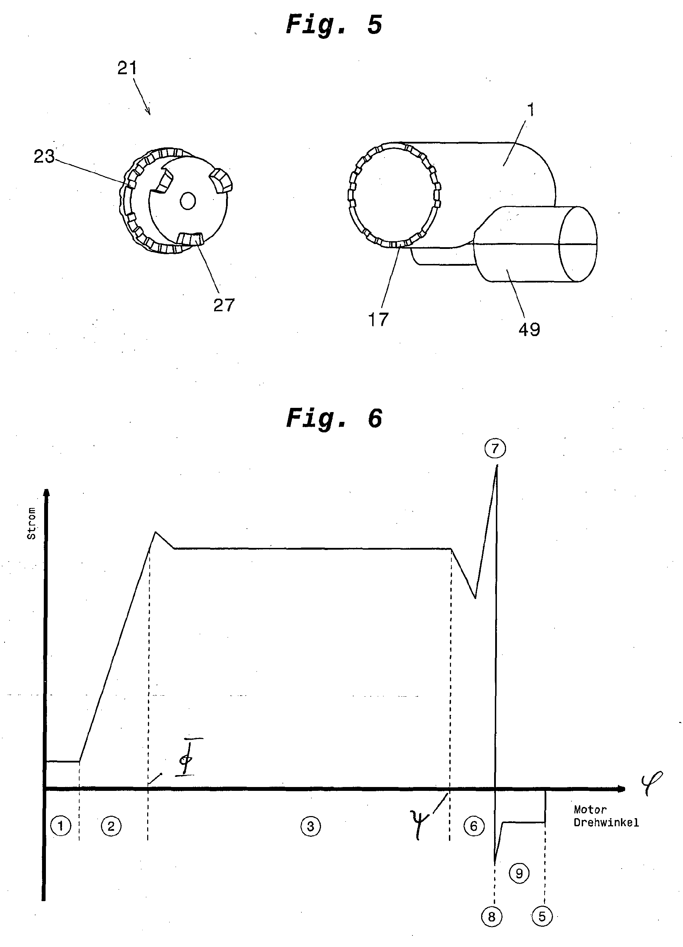

Das rohrförmige Basisteil 1 umfasst ein erstes offenes Ende 13 und ein gegenüberliegendes zweites offenes Ende 15. An dem ersten offenen Ende 13 sind in Axialrichtung weisende erste Kupplungselemente 17 angeordnet, die in Form von Vorsprüngen oder Zähnen einer ersten Breite 18 und einer zweiten Breite 19 ausgestaltet sind. Die Anzahl der Kupplungselemente der ersten Breite 18 ist größer als die Anzahl der Kupplungselemente zweiter Breite 19. Es sind konkret drei erste Kupplungselemente zweiter Breite 19 vorgesehen, die symmetrisch über den Umfang des ersten offenen Endes 13 verteilt sind. Zwischen den ersten Kupplungselementen zweiter Breite 19 sind jeweils vier Kupplungselemente erster Breite 18 auf dem Umfang des ersten offenen Endes 13 des Basisteils 1 angeordnet - siehe Fig. 5.

Das zu drehende Teil 3 umfasst ein erstes Drehelement 21 das zweite Kupplungselemenf 23 aufweist, die komplementär zu den ersten Kupplungselementen 17 ausgebildet sind. D.h. die zweiten Kupplungselemente 23 weisen Vertiefungen erster Breite 24 auf, die zur Aufnahme der ersten Kupplungselemente erster Breite 18 dienen, und Vertiefungen zweiter Breite 25 auf, die zur Aufnahme der zweiten Kupplungselemente 19 zweiter Breite dienen. Durch diese Anordnung von ersten Kupplungselementen 17 auf dem Basisteil 1 und zugeordneten komplementären zweiten Kupplungselementen 23 auf dem ersten Drehelemente 21 des zu drehenden Teils 3 können die ersten und zweiten Kupplungselemente 17, 23 nur bei drei bestimmten Winkelpositionen bzw. bei drei bestimmten Drehpositionen ineinander eingreifen und damit Basisteil 1 und zu drehendes Teil 3 drehfest miteinander koppeln. Das erste Drehelement 21 umfasst auch drei Entkupplungszapfen 27, die gegenüber den zweiten Kupplungselementen 23 radial nach innen und axial nach vorne abgesetzt sind. Die drei Entkupplungszapfen 27 sind symmetrisch über den Rand des ersten Drehteils 21 verteilt angeordnet und erstrecken sich axial von diesem weg. Auf der von den Entkupplungszapfen 27 abgewandten Seite des ersten Drehelements 21 ist eine kreisringförmige Rastfläche 29 vorgesehen, die mit einer zugeordneten Gegenrastfläche 31 auf einem zweiten Drehelement 33 in Eingriff steht.

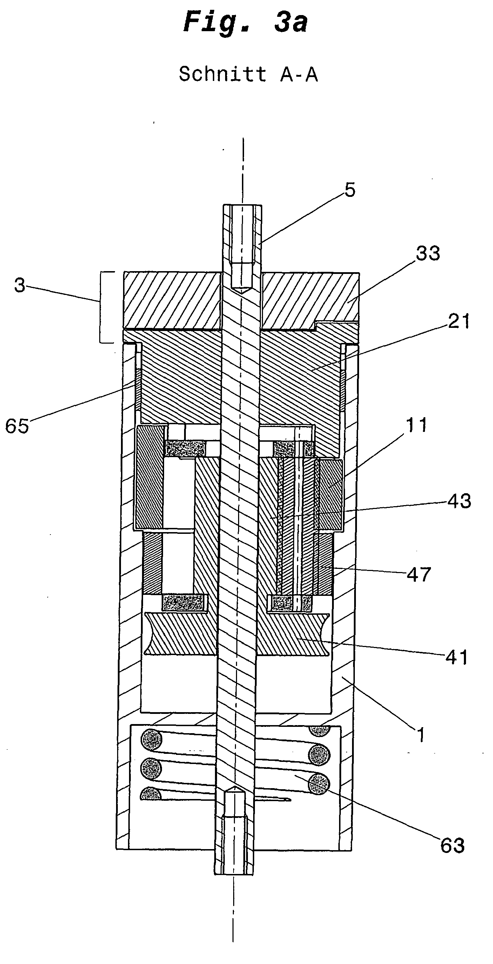

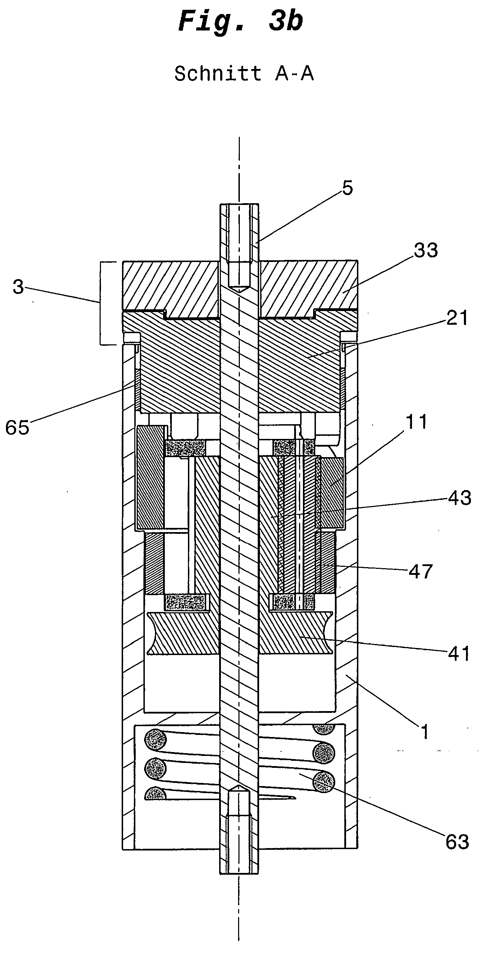

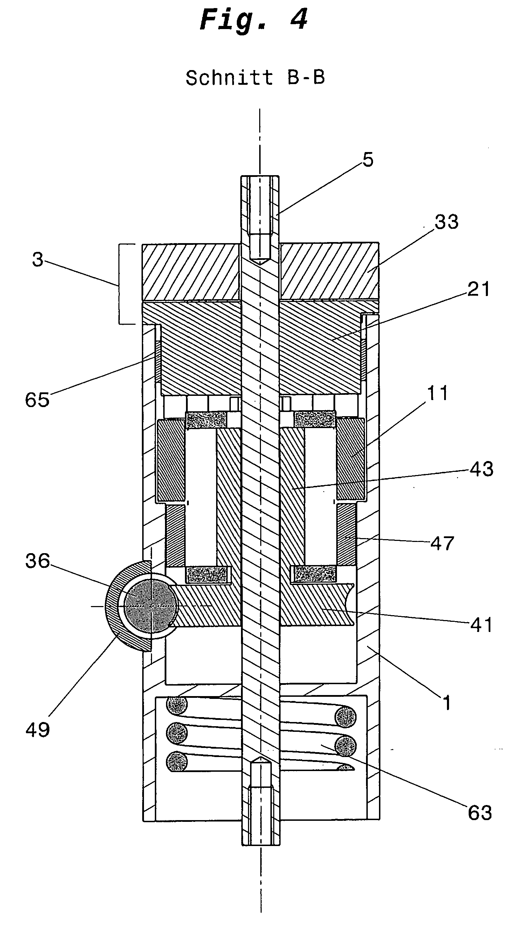

Der elektrische Drehantrieb 7 umfasst einen Elektromotor 35 mit Antriebsschnecke 36. Das Wolfrom-Getriebe 9 umfasst ein zentrales Sonnenzahnrad 43, das drehfest mit einem zentralen Schneckenrad 41 verbunden ist. Das Wolfrom-Getriebe 9 wird durch die Antriebsschnecke 36 angetrieben, die in das Schneckenrad 41 eingreift. Das zentrale Sonnenzahnrad 43 treibt drei zugeordnete Planetenzahnräder 45 an, die wiederum in ein bezüglich des Basisteils 1 ortsfestes Hohlrad 47 sowie in eine Innenverzahnung in dem Abtriebteil 11 eingreifen. Wie aus den Fig. 3 und 4 zu ersehen ist, ist das Wolfrom-Getriebe 9 an dem rohrförmigen Basisteil 1 angeordnet. Der Elektromotor 35 mit Antriebsschnecke 36 ist quer zu dem Basisteil 1 angeordnet und die Antriebsschnecke 36 greift über eine Öffnung in dem Basisteil 1 in das Schneckenrad 41 ein. Über Abdeckelemente 49 wird der Elektromotor 35 und die Antriebsschnecke 36 abgedeckt und gegen Witterungseinflüsse geschützt.

Das kreisringförmige Abtriebteil 11 weist, wie erwähnt, eine Innenverzahnung auf, in das die Planetenzahnräder 45 des Wolfrom-Getriebes 9 eingreifen. Das Abtriebselement 11 umfasst einen ersten Rand 51 und einen gegenüberliegenden zweiten Rand 53. Auf dem ersten Rand 51 sind symmetrisch über den Umfang verteilt drei Mitnehmerzapfen 55 ausgebildet, die sich in axialer Richtung von dem ersten Rand 51 weg erstrecken und dem ersten Drehelement 21 mit den Entkupplungszapfen 27 zugewandt sind. Zwischen den drei Mitnehmerzapfen 55 ist jeweils eine untere Plateaufläche 57 links und rechts gefolgt von zwei Schrägflächen 59 und die wiederum gefolgt zwei oberen Plateauflächen 61 angeordnet. Die beiden oberen Plateauflächen 61 enden jeweils links und rechts an den Flanken der Mitnehmerzapfen 55. Die Entkupplungszapfen 27 gleiten bei Drehung des Abtriebteils 11 durch den elektrischen Drehantrieb 7 auf den unteren Plateauflächen 57 zu den Schrägflächen 59 und gelangen auf den oberen Pläteauflächen 61 in Kontakt mit den Flanken der Mitnehmerzapfen 55.

Wie aus Fig. 3 und 4 zu ersehen ist, sind das Wolfrom-Getriebe 9, das Abtriebteil 11 sowie der größte Teil des ersten Drehelements 21 im Inneren des rohrförmigen Basisteils 1 angeordnet. Die einzelnen Komponenten werden über das Achselement 5 und eine am Basisteil 1 angreifendes elastisches Element in Form einer Spiralfeder 63 gegeneinander verspannt. Das Abtriebteil 11 ist hierbei über einen Lagerring 65 drehbar im Inneren des Basisteils 1 gelagert. Das Wolfrom-Getriebe 9 ist selbsthemmend, d. h. im stromlosen Zustand bleiben die Planetenzahnräder 45 stehen und drehen sich nicht weiter.

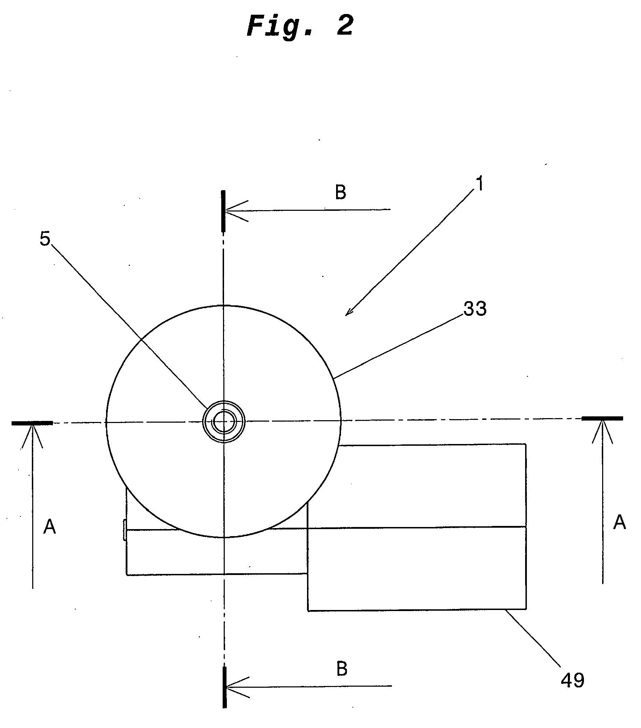

Nachfolgend wird die Funktionsweise der ersten Ausführungsform gemäß den Fig. 1 bis 4 anhand des Diagramms in Fig. 6 beschrieben. Fig. 6 zeigt die Stromaufnahme des Elektromotors 35 als Funktion des Drehwinkels ϕ des Elektromotors 35 bzw. des Abtriebteils 11 dar. Der maximale Drehwinkel ψ wird durch einen mechanischen Anschlag - nicht dargestellt - eingestellt und festgelegt. In der Nullstellung, d.h. bei nicht aktivem elektrischen Drehantrieb 7 sind das Basisteil 1 und das erste Drehteil 3 über die beiden Kopplungselemente 17 und 23 drehfest miteinander verbunden. Wird der elektrische Drehantrieb 7 aktiviert schleifen die Entkupplungszapfen 27 zunächst auf den unteren Plateauflächen 57 des Abtriebteils 11 - Phase (1) in Fig. 6. Danach gleiten die Entkupplungszapfen 27 in Phase (2) entlang der Schrägflächen 59 und drücken das zu drehende Teil 3 und das Abtriebteil 11 axial auseinander und lösen somit die ersten Kupplungselemente 17 von den zweiten Kupplungselementen 23 - Entkupplungswinkel Φ. Nach dem Entkoppeln der beiden Kupplungselemente 17 und 23 erreichen die Entkupplungszapfen 27 die oberen Plateauflächen 61 und geraten in Anschlag mit den Mitnehmerzapfen 55 auf dem Abtriebselement 11. Die Drehung des Abtriebteils 11 überträgt sich über die Mitnehmerzapfen 55 auf die Entkupplungszapfen 27 und damit auf das erste Drehelement 21 und das zu drehende Teil 3. Damit erfolgt das Verdrehen z.B. das Abklappen eines Spiegels - Phase (3). In Phase (3) gleiten die freien Enden der beiden Kupplungselemente 17 und 23 aneinander entlang. Bei Erreichen der Winkelposition ψ der beiden Kupplungselemente 17, 23 bei der sie wieder einkuppeln könnten - Phase (6) - sinkt die Stromaufnahme des elektrischen Drehantriebs 7, da die Reibung zwischen den beiden Kupplungselementen 17 und 23 sinkt. Wird der mechanische Anschlag in Punkt (7) erreicht steigt die Stromaufnahme stark an - Phase (7). Dieser Stromanstieg wird durch eine Sensor- und Steuervorrichtung - nicht dargestellt - erfasst und es wird die Drehrichtung des Elektromotors 36 und damit des Abtriebteils umgekehrt - Phase (8). Durch Umkehrung der Drehrichtung gleiten die Entkupplungszapfen 27 von den oberen Plateauflächen 61 entlang der Schrägflächen 59 wieder "hinab" zu den unteren Plateauflächen 57 des Abtriebteils11 - Phase (9). Aufgrund der Federvorspannung über die Spiralfeder 63 geraten die ersten und zweiten Kupplungselemente 17, 23 wieder in Eingriff, so dass Basisteil 1 und zu drehendes Teil 3 wieder drehfest miteinander gekoppelt sind. Der elektrische Drehantrieb 7 wird desaktiviert und ist von dem zu drehenden Teil 3 mechanisch entkoppelt - Nullstellung.

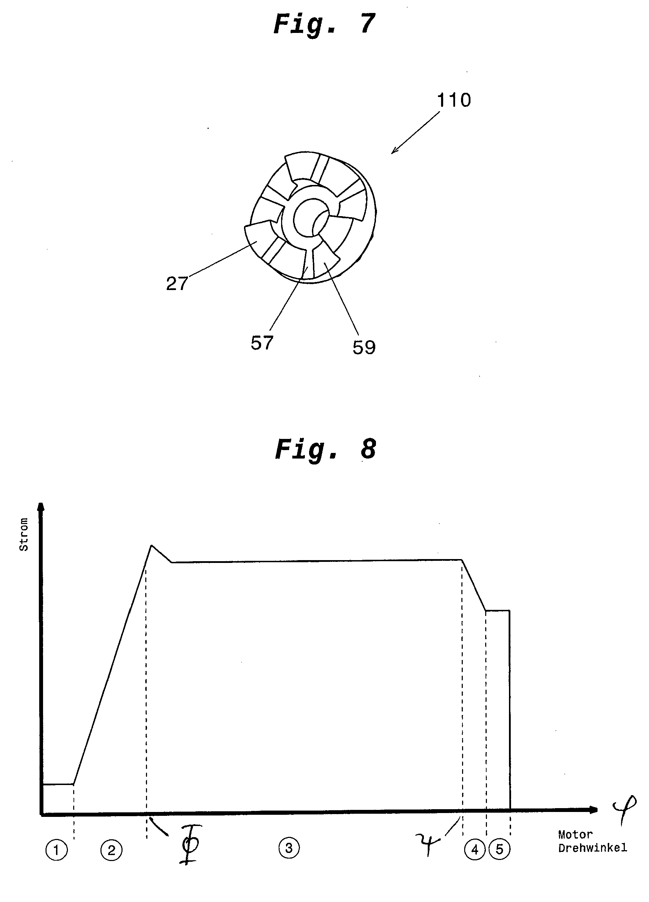

Anhand von Fig. 7 und 8 wird eine zweite Ausführungsform der Erfindung beschreiben. Die zweite Ausführungsform unterscheidet sich vom Aufbau her im Wesentlichen nur durch die Ausgestaltung des Abtriebteils 110, bei dem gegenüber dem Abtriebteil 11 der ersten Ausführungsform keine oberen Plateauflächen 61 vorgesehen sind, d. h. die Schrägflächen 59 enden unmittelbar an den Flanken der Mitnehmerzapfen 55. Zusätzlich ist das Getriebe als nicht-selbsthemmendes Getriebe ausgelegt, d. h. das Getriebe kann im stromlosen Zustand verdreht werden.

Der Übergang zwischen Nullstellung, Basisteil 1 und zu drehendes Teil 3 sind über die beiden Kupplungselemente 17, 23 drehfest miteinander verbunden und der elektrische Drehantrieb 7 ist desaktiviert, und entkoppelten Zustand bei dem der elektrische Drehantrieb 7 aktiv ist und wieder zurück zur Nullstellung wird nachfolgend anhand von Fig. 8 beschreiben. Fig. 8 zeigt analog zu Fig. 6 die Stromaufnahme des Elektromotors 35 als Funktion des Drehwinkels des Elektromotors 35 bzw. des Abtriebteils 11. In der Nullstellung, d.h. bei nicht aktivem elektrischen Drehantrieb 7 sind das Basisteil 1 und das erste Drehteil 3 über die beiden Kopplungselemente 17 und 23 drehfest miteinander verbunden. Wird der elektrische Drehantrieb 7 aktiviert schleifen die Entkupplungszapfen 27 zunächst auf den unteren Plateauflächen 57 des Abtriebteils 11 - Phase (1) in Fig. 8. Danach gleiten die Entkupplungszapfen 27 in Phase (2) entlang der Schrägflächen 59 und drücken das zu drehende Teil 3 und das Abtriebteil 11 axial auseinander und lösen somit die ersten Kupplungselemente 17 von den zweiten Kupplungselementen 23. Am Ende der Schrägflächen 59 geraten die Entkupplungszapfen 27 in Anschlag mit den Mitnehmerzapfen 55 auf dem Abtriebselement 11. Die Drehung des Abtriebteils 11 überträgt sich über die Mitnehmerzapfen 55 auf die Entkupplungszapfen 27 und damit auf das erste Drehelement 21 und das zu drehende Teil 3. Damit erfolgt das Verdrehen z.B. das Abklappen eines Spiegels - Phase (3). In Phase (3) gleiten die freien Enden der beiden Entkupplungselemente 17 und 23 aneinander entlang. Bei Erreichen der ersten Winkelposition der beiden Kupplungselemente 17, 23 bei der sie wieder einkuppeln könnten - Phase (4) - sinkt die Stromaufnahme des elektrischen Drehantriebs 7, da die Reibung zwischen den beiden Kupplungselementen 17 und 23 sinkt. Dieser Stromabfall wird durch Sensor- und Steuervorrichtung erfasst und der elektrische Drehantrieb 7 wird abgeschaltet - Phase (5). Aufgrund der Schrägflächen 59 und der Federvorspannung durch die Spiralfeder 63 werden Abtriebteil 110 und zu drehendes Teil in axialer Richtung zusammengedrückt, die Entkupplungszapfen 27 gleiten entlang der Schrägflächen 59 "hinab" zu den unteren Plateauflächen 57, so dass die beiden Kupplungselemente 17 und 23 selbsttätig wieder in Eingriff gelangen und Basisteil und zu drehendes Teil wieder drehfest miteinander gekoppelt sind; die Nullstellung ist wieder erreicht.

Da das Erfassen des Stromabfalls in Phase (4) in Fig. 8 unter Umständen schwierig und aufwendig ist, kann auch bei der zweiten Ausführungsform noch zusätzlich ein mechanischer Anschlag vorgesehen werden, so dass lediglich ein starker Stromanstieg bei Erreichen des mechanischen Anschlags wie bei der ersten Ausführungsform nach Fig. 6 nötig ist. Die Nullstellung wird dann wieder selbsttätig aufgrund der fehlenden oberen Plateauflächen an dem Abtriebteil 110 durch die Federvorspannung der Spiralfeder 63 erreicht.

Durch die bei beiden beispielhaften Ausführungsformen vorgesehene Aufteilung des zu drehenden Teils 3 in ein erstes Drehelement 21 mit Rastfläche 29 und zweites Drehelement 33 mit Gegenrastfläche 31 wird die Funktion einer Notraste bereitgestellt, d. h. im Falle einer Kollision z. B. eines Spiegels mit einem Hindernis klappt der Spiegel durch Rastfläche 29 und Gegenrastfläche 31 ohne Belastung des elektrischen Drehantriebs 7 in Abklappstellung. Das Drehmoment bei der diese Notraste auslöst wird durch die geometrische Ausgestaltung von Rastfläche 29 und Gegenrastfläche 31 und durch die Stärke der Spiralfeder 63 festgelegt.

### Bezugszeichenliste:

- 1: Basisteil
- 3: zu drehendes Teil
- 5: Achselement
- 7: elektrischer Drehantrieb
- 9: Wolfrom-Getriebe
- 11: Abriebteil
- 13: erstes offenes Ende von 1
- 15: zweites offenes Ende von 1
- 17: erste Kupplungselemente
- 18: erste Kupplungselemente erster Breite
- 19: erste Kupplungselemente zweiter Breite
- 21: erstes Drehelement
- 23: zweite Kupplungelemente
- 24: Vertiefungen erster Breite
- 25: Vertiefungen zweiter Breite
- 27: Entkupplungselement, Entkupplungszapfen an 21
- 29: Rastfläche
- 31: Gegenrastfläche
- 33: zweites Drehelement
- 35: Elektromotor
- 36: Antriebsschnecke
- 41: Schneckenrad
- 43: Sonnenzahnrad
- 45: Planetenzahnräder
- 47: Hohlrad
- 49: Abdeckung
- 51: erster Rand von 11
- 53: zweiter Rand von 11
- 55: Mitnehmerelement, Mitnehmerzapfen an 11 und 110
- 57: untere Plateauflächen
- 59: schräg verlaufender Abschnitt, Schrägflächen
- 61: obere Plateauflächen
- 63: Spiralfeder
- 65: Lagerring
- 110: Abtriebteil

## Patentansprüche

1. Elektrisch rotatorische Verstelleinheit, insbesondere für indirekte Sichtsysteme für Fahrzeuge, mit
einem Basisteil (1),
einem zu drehenden Teil (3), das axial drehbar gelagert ist,
einem mit dem Basisteil (1) verbundenen elektrischen Drehantrieb (7), der mit dem zu drehenden Teil (3) koppelbar ist, um das zu drehende Teil (3) elektromotorisch zu verdrehen, und
einer Kupplungsvorrichtung (11;110,17,23), welche zwischen Basisteil (1) und zu drehendem Teil (3) vorgesehen ist,
**dadurch gekennzeichnet, dass**
die Kupplungsvorrichtung (11;110,17,23) zwischen Basisteil (1) und zu drehendem Teil (3) in Nullstellung, bei der der elektrische Drehantrieb (7) desaktiviert ist, Basisteil (1) und zu drehendes Teil (3) drehfest miteinander koppelt und den elektrischen Drehantrieb (7) von dem zu drehenden Teil (3) entkoppelt, und dass die Kupplungsvorrichtung (11; 110, 17, 23) bei Aktivierung des elektrischen Drehantriebs (7) Basisteil (1) und zu drehendes Teil (3) voneinander entkoppelt und den elektrischen Drehantrieb (7) mit dem zu drehenden Teil (3) koppelt.

2. Elektrisch rotatorische Verstelleinheit nach Anspruch 1, **dadurch gekennzeichnet,**
**dass** das Basisteil (1) erste Kupplungselemente (17) aufweist,
**dass** das zu drehende Teil (3) zweite Kupplungselemente (23) sowie wenigstens ein Entkupplungselement (27) aufweist,
**dass** zwischen zu drehendem Teil (3) und Basisteil (1) ein axial gelagertes Abtriebteil (11; 110) vorgesehen ist, das mit dem elektrischen Drehantrieb (7) gekoppelt ist und wenigstens einen Mitnehmerelement (55) aufweist, dass das Abtriebteil eine Geometrie (55, 57, 59, 61) aufweist, die im Zusammenwirken mit dem wenigstens einen Entkupplungselement (27) bei Verdrehung des Abtriebteils (11; 110) bis zu einen Entkupplungswinkel (Φ) zu drehendes Teil (3) und Basisteil (1) in axialer Richtung auseinanderdrückt und damit die beiden Kupplungselemente (17, 23) entkuppelt,
**dass** bei weiterer Verdrehung des Abtriebteils (11; 110) um einen Winkel (ϕ), mit ϕ>Φ, das wenigstens eine Entkupplungselement (27) in Eingriff mit dem wenigstens einen Mitnehmerelement (55) gelangt, so dass das zu drehende Teil (3) durch den elektrischen Drehantrieb (7) verdreht wird, und
**dass** in Nullstellung der elektrische Drehantrieb (7) von dem zu drehendem Teil (3) entkoppelt ist.

3. Elektrisch rotatorische Verstelleinheit nach Anspruch 2, **dadurch gekennzeichnet,**
**dass** das wenigstens eine Entkupplungselement ein Entkupplungszapfen (27) und das Mitnehmerelement ein Mitnehmerzapfen (55) ist, die sich axial aufeinander zu erstrecken,
**dass** das Abtriebteil (11;110) wenigstens einen schräg verlaufenden Abschnitt (59) aufweist,
**dass** der wenigstens eine schräg verlaufende Abschnitt (59) bei Verdrehung des Abtriebteils (11; 110) bis zu dem Entkupplungswinkel (Φ) gegen den wenigstens einen Entkupplungszapfen (27) am zu drehenden Teil (3) drückt und zu drehendes Teil (3) und Basisteil (1) in axialer Richtung auseinanderdrückt und damit die beiden Kupplungselemente (17, 23) entkuppelt,
**dass** bei weiterer Verdrehung des Abtriebteilss (11; 110) um einen Winkel (ϕ), mit ϕ>Φ, der wenigstens eine Entkupplungszapfen (27) in Eingriff mit dem wenigstens einen Mitnehmerzapfen (55) gelangt, so dass das zu drehende Teil (3) durch den elektrischen Drehantrieb (7) verdreht wird.

4. Elektrisch rotatorische Verstelleinheit nach einem der vorhergehenden Ansprüche, **dadurch gekennzeichnet, dass** zu drehendes Teil (3) und Basisteil (1) über ein elastisches Element, insbesondere in Form einer Spiralfeder (63), gegeneinander verspannt sind.

5. Elektrisch rotatorische Verstelleinheit nach einem der vorhergehenden Ansprüche, **dadurch gekennzeichnet, dass** die Kupplungselemente (17, 23) Elemente einer Klauenkupplung sind.

6. Elektrisch rotatorische Verstelleinheit nach einem der vorhergehenden Ansprüche 2 bis 4, dass das Abtriebteil (11; 110) ringförmig ausgebildet ist und einen ersten und einen zweiten Rand (51, 53) aufweist, und dass auf dem ersten Rand (51) der wenigstens eine schräg verlaufende Abschnitt (59) und der wenigstens einen Mitnehmerzapfen (55) ausgebildet sind.

7. Elektrisch rotatorische Verstelleinheit nach Anspruch 6, dass das Abtriebteil (11; 110) eine Mehrzahl von Mitnehmerzapfen (55), vorzugsweise drei, und eine Mehrzahl, von schräg verlaufenden Abschnitten (59) umfasst und dass die schräg verlaufenden Abschnitte (59) zwischen den Mitnehmerzapfen (55) ausgebildet sind.

8. Elektrisch rotatorische Verstelleinheit nach einem der vorhergehenden Ansprüche 2 bis 6, **dadurch gekennzeichnet, dass** ausgehend von der Nullstellung vor dem wenigstens einen schräg verlaufenden Abschnitt (59) eine Plateaufläche (57) vorgesehen ist.

9. Elektrisch rotatorische Verstelleinheit nach einem der vorhergehenden Ansprüche 2 bis 7, **dadurch gekennzeichnet, dass** der wenigstens eine schräg verlaufende Abschnitt (59) an dem wenigstens einen Mitnehmerzapfen (55) endet.

10. Elektrisch rotatorische Verstelleinheit nach einem der vorhergehenden Ansprüche, **dadurch gekennzeichnet, dass** der elektrische Drehantrieb (7) ein Getriebe, vorzugsweise ein Planetengetriebe und insbesondere ein Wolfrom-Planetengetriebe (9) umfasst, das mit dem Abtriebteil (11; 110) verbunden ist.

11. Elektrisch rotatorische Verstelleinheit nach Anspruch 10, **dadurch gekennzeichnet, dass** das Getriebe (9) nicht selbsthemmend ist.

12. Elektrisch rotatorische Verstelleinheit nach einem der vorhergehenden Ansprüche, **dadurch gekennzeichnet, dass** die Entkupplungselemente (17, 23) im Wesentlichen trapezförmige Zähne und komplementäre trapezförmige Vertiefungen aufweisen.

13. Elektrisch rotatorische Verstelleinheit nach einem der vorhergehenden Ansprüche, **dadurch gekennzeichnet, dass** durch einen mechanischen Anschlag ein maximaler Verdrehwinkel (Ω) des zu drehenden Teils (3) festgelegt ist.

14. Elektrisch rotatorische Verstelleinheit nach Anspruch 13, **dadurch gekennzeichnet, dass** eine Sensor- und Steuervorrichtung vorgesehen ist, mittels der der Stromanstieg des elektrischen Drehantriebs (7) und damit das Erreichen des Anschlags erfassbar ist, und dass die Sensor- und Steuervorrichtung das Abtriebteil (11) zurückdreht, bis die beiden Kupplungselemente (17, 23) wieder einkuppeln und damit die Nullstellung wieder erreicht ist.

15. Elektrisch rotatorische Verstelleinheit nach einem der vorhergehenden Ansprüche 1 bis 10, **dadurch gekennzeichnet, dass** die Kupplungselemente (17, 23) in Umfangsrichtung unterschiedliche Breite aufweisen, und dass mehr Kupplungselemente einer ersten Breite (18, 24) und weniger Kupplungselemente einer zweiten Breite (19, 25) vorgesehen sind, dass die Kupplungselemente (17, 23) erst nach Verdrehen um einen bestimmten Winkel (ψ) wieder in Nullstellung einrasten können.

16. Elektrisch rotatorische Verstelleinheit nach Anspruch 15, **dadurch gekennzeichnet, dass** eine Sensor- und Steuervorrichtung vorgesehen ist, die bei Erreichen des bestimmten Winkels (ψ) das Abtriebteil (11) zurückdreht, bis die beiden Kupplungselemente (17, 23) wieder einkuppeln und damit die Nullstellung wieder erreicht ist.

17. Elektrisch rotatorische Verstelleinheit nach Anspruch 16, **dadurch gekennzeichnet, dass** das Erreichen des bestimmten Winkels (ψ) durch die die Sensor- und Steuervorrichtung dadurch ermittelt wird, dass ein Stromabfall des elektrischen Drehantriebs (7) erfasst wird.

18. Elektrisch rotatorische Verstelleinheit nach einem der vorhergehenden Ansprüche, **dadurch gekennzeichnet,**
**dass** ein Achselement (5) vorgesehen ist,
**dass** das Achselement (5) drehbar in dem Basisteil (1) gelagert ist, und
**dass** das zu drehende Teil (5) drehbar an dem Achselement (5) gelagert ist.

19. Elektrisch rotatorische Verstelleinheit nach einem der vorhergehenden Ansprüche 2 bis 18, **dadurch gekennzeichnet, dass** zu drehendes Teil (3), Basisteil (1) und Abtriebteil (11; 110) einen im Wesentlichen kreisförmigen Querschnitt aufweisen.

20. Elektrisch rotatorische Verstelleinheit nach einem der vorhergehenden Ansprüche, **dadurch gekennzeichnet, dass** das Basisteil (1) rohrförmig ausgebildet ist und ein erstes und ein zweites offenes Ende (13, 15) aufweisen.

21. Elektrisch rotatorische Verstelleinheit nach Anspruch 20, **dadurch gekennzeichnet, dass** die ersten Kupplungselemente (17) im Randbereich des ersten offenen Endes (13) angeordnet sind.

22. Elektrisch rotatorische Verstelleinheit nach Anspruch 20 oder 21, **dadurch gekennzeichnet, dass** das Abtriebteil (11; 110) und der elektrische Drehantrieb (7) oder zumindest das Abtriebteil (11; 110) und das Getriebe (9) im Inneren des rohrförmigen Basisteils (1) angeordnet sind.

23. Elektrisch rotatorische Verstelleinheit nach einem der vorhergehenden Ansprüche 2 bis 22, **dadurch gekennzeichnet, dass** das zu drehende Teil (3) ein erstes Drehelement (21) mit dem wenigstens einen Entkupplungszapfen (27), den ersten Kupplungselementen (17) und Rastflächen (29) und ein zweites Drehelement (33) mit zugehörigen Gegenrastflächen (31) aufweist.

## Claims

1. An electrically rotational adjusting unit, especially for indirect visual systems for vehicles, comprising
a base member (1),
a member (3) to be rotated which is axially pivoted,
an electric rotary actuator (7) that is connected to the base member (1) and can be coupled to the member (3) to be rotated so as to rotate the member (3) to be rotated by electromotive force, and
a coupling device (11; 110, 17, 23) which is provided between base member (1) and member (3) to be rotated,
**characterized in that**
the coupling device (11; 110, 17, 23) between the base member (1) and the member (3) to be rotated which couples in the neutral position, at which the electric rotary actuator (7) is deactivated, the base member (1) to the member (3) to be rotated in a rotationally fixed manner and uncouples the electric rotary actuator (7) from the member (3) to be rotated, and
that upon activation of the electric rotary actuator (7) the coupling device (11; 110, 17, 23) uncouples the base member (1) from the member (3) to be rotated and couples the electric rotary actuator (7) to the member (3) to be rotated.

2. The electrically rotational adjusting unit according to claim 1, **characterized in that** the base member (1) includes first coupling elements (17),
that the member (3) to be rotated includes two coupling elements (23) as well as at least one decoupling element (27),
that between the member (3) to be rotated and the base member (1) an axially supported driven member (11; 110) is provided which is coupled to the electric rotary actuator (7) and includes at least one driving element (55),
that the driven member has a geometry (55, 57, 59, 61) which by interaction with the at least one decoupling element (27) when the driven member (11; 110) is rotated up to a decoupling angle (φ), forces the member (3) to be rotated and the base member (1) apart in the axial direction and thus uncouples the two coupling elements (17, 23),
that, when the driven member (11; 110) is further rotated about an angle (ϕ), wherein ϕ>φ, the at least one decoupling element (27) is engaged in the at least one driving element (55) so that the member (3) to be rotated is rotated by the electric rotary actuator (7) and
that in the neutral position the electric rotary actuator (7) is uncoupled from the member (3) to be rotated.

3. The electrically rotational adjusting unit according to claim 2, **characterized in that** the at least one decoupling element is a decoupling lug (27) and the driving element is a driving lug (55) which extend axially toward each other,
that the driven member (11; 110) has at least one inclined portion (59), that, when the driven member (11; 110) is rotated up to the decoupling angle (φ), the at least one inclined portion (59) urges against the at least one decoupling lug (27) at the member (3) to be rotated and forces the member (3) to be rotated apart from the base member (1) in the axial direction and thus uncouples the two coupling elements (17, 23),
that, when the driven member (11; 110) is further rotated about an angle (ϕ), wherein (ϕ>φ), the at least one decoupling lug (27) is engaged in the at least one driving lug (55) so that the member (3) to be rotated is rotated by the electric rotary actuator (7).

4. The electrically rotational adjusting unit according to any one of the preceding claims, **characterized in that** the member (3) to be rotated and the base member (1) are braced against each other via an elastic element, especially in the form of a spiral spring (63).

5. The electrically rotational adjusting unit according to any one of the preceding claims, **characterized in that** the coupling elements (17, 23) are elements of a dog coupling.

6. The electrically rotational adjusting unit according to any one of the preceding claims 2 to 4, **characterized in that** the driven member (11; 110) is ring-shaped and includes first and second rims (51, 53), and that on the first rim (51) the at least one inclined portion (59) and the at least one driving lug (55) are formed.

7. The electrically rotational adjusting unit according to claim 6, **characterized in that** the driven member (11; 110) comprises a plurality of driving lugs (55), preferably three, and a plurality of inclined portions (59) and that the inclined portions (59) are formed between the driving lugs (55).

8. The electrically rotational adjusting unit according to any one of the preceding claims 2 to 6, **characterized in that**, based on the neutral position, a plateau face (57) is provided ahead of the at least one inclined portion (59).

9. The electrically rotational adjusting unit according to any one of the preceding claims 2 to 7, **characterized in that** the at least one inclined portion (59) ends at the at least one driving lug (55).

10. The electrically rotational adjusting unit according to any one of the preceding claims, **characterized in that** the electric rotary actuator (7) comprises a gearing, preferably a planetary gearing and especially a Wolfrom planetary gearing (9), connected to the driven member (11; 110).

11. The electrically rotational adjusting unit according to claim 10, **characterized in that** the gearing (9) is not self-locking.

12. The electrically rotational adjusting unit according to any one of the preceding claims, **characterized in that** the decoupling elements (17, 23) include substantially trapezoidal teeth and complementary trapezoidal recesses.

13. The electrically rotational adjusting unit according to any one of the preceding claims, **characterized in that** a maximum angle of rotation (Ω) of the member (3) to be rotated is set by a mechanical stop.

14. The electrically rotational adjusting unit according to claim 13, **characterized in that** a sensor and control device is provided by which the current increase of the electric rotary actuator (7) and thus the reaching of the stop can be detected, and that the sensor and control device returns the driven member (11) until the two coupling elements (17, 23) are engaged again and thus the neutral position is reached again.

15. The electrically rotational adjusting unit according to any one of the preceding claims 1 to 10, **characterized in that** the coupling elements (17, 23) have a different width in the circumferential direction, and that more coupling elements of a first width (18, 24) and fewer coupling elements of a second width (19, 25) are provided, that the coupling elements (17, 23) can lock in the neutral position again only after rotation about a particular angle (ψ).

16. The electrically rotational adjusting unit according to claim 15, **characterized in that** a sensor and control device is provided which upon reaching said particular angle (ψ) returns the driven member (11) until the two coupling elements (17, 23) engage again and thus the neutral position is reached again.

17. The electrically rotational adjusting unit according to claim 16, **characterized in that** the reaching of said particular angle (ψ) is determined by the sensor and control device by the fact that a current drop of the electric rotary actuator (7) is detected.

18. The electrically rotational adjusting unit according to any one of the preceding claims, **characterized in that**
an axle element (5) is provided,
that the axle element (5) is pivoted in the base member (1) and
that the member (3) to be rotated is pivoted on the axle element (5).

19. The electrically rotational adjusting unit according to any one of the preceding claims 2 to 18, **characterized in that** the member (3) to be rotated, the base member (1) and the driven member (11; 110) have a substantially circular crosssection.

20. The electrically rotational adjusting unit according to any one of the preceding claims, **characterized in that** the base member (1) has a tubular shape and includes first and second open ends (13, 15).

21. The electrically rotational adjusting unit according to claim 20, **characterized in that** the first coupling elements (17) are arranged in the rim area of the first open end (13).

22. The electrically rotational adjusting unit according to claim 20 or 21, **characterized in that** the driven member (11; 110) and the electric rotary actuator (7) or at least the driven member (11; 110) and the gearing (9) are arranged inside the tubular base member (1).

23. The electrically rotational adjusting unit according to any one of the preceding claims 2 to 22, **characterized in that** the member (3) to be rotated includes a first rotary element (21) comprising the at least one decoupling lug (27), the first coupling elements (17) and stop faces (29) and a second rotary element (33) comprising related counter-stop faces (31).

## Revendications

1. Unité de réglage à rotation électrique, destinée en particulier à des systèmes de vision indirects pour des véhicules, comprenant
une partie de base (1),
une partie (3) à faire tourner, qui est montée de manière à pouvoir tourner axialement,
un entraînement rotatif (7) électrique reliée à la partie de base (1), lequel peut être couplé à la partie (3) à faire tourner afin de faire tourner par un moteur électrique la pièce (3) à faire tourner, et
un dispositif de couplage (11 ; 110, 17, 23), qui est prévu entre la partie de base (1) et la partie (3) à faire tourner,
**caractérisée en ce**
**que** le dispositif de couplage (11 ; 110, 17, 23) situé entre la partie de base (1) et la partie (3) à faire tourner couple l'une à l'autre de manière solidaire en rotation la partie de base (1) et la partie (3) à faire tourner dans une position de remise à zéro, dans laquelle l'entraînement rotatif (7) électrique est désactivé, et découple l'entraînement rotatif (7) électrique de la pièce (3) à faire tourner, et
en ce que le dispositif de couplage (11 ; 110, 17, 23) découple l'une de l'autre la partie de base (1) et la partie (3) à faire tourner lors de l'activation de l'entraînement rotatif (7) électrique et couple l'entraînement rotatif (7) électrique à la partie (3) à faire tourner.

2. Unité de réglage à rotation électrique selon la revendication 1, **caractérisée en ce**
**que** la partie de base (1) présente des premiers éléments de couplage (17),
en ce que la partie (3) à faire tourner présente des deuxièmes éléments de couplage (23) ainsi qu'au moins un élément de découplage (27),
en ce qu'est prévue, entre la partie (3) à faire tourner et la partie de base (1), une partie de sortie (11 ; 110) montée axialement, qui est couplée à l'entraînement rotatif (7) électrique et qui présente au moins un élément entraîneur (55),
en ce que la partie de sortie présente une forme géométrique (55, 57, 59, 61), qui écarte, en coopération avec l'élément de découplage (27) au moins au nombre de un, lors de la rotation de la partie de sortie (11 ; 110) jusqu'à un angle de découplage (Φ), la partie (3) à faire tourner et la partie de base (1) dans une direction axiale et découple, ce faisant, les deux éléments de couplage (17 ; 23),
en ce que lors de la poursuite de la rotation de la partie de sortie (11 ; 110) selon un angle (ϕ), où ϕ > Φ, l'élément de découplage (27) au moins au nombre de un parvient en prise avec l'élément entraîneur (55) au moins au nombre de un de sorte que la partie (3) à faire tourner est tournée par l'entraînement rotatif (7) électrique, et
en ce qu'en position de remise à zéro, l'entraînement rotatif (7) électrique est découplé de la partie (3) à faire tourner.

3. Unité de réglage à rotation électrique selon la revendication 2, **caractérisée en ce**
**que** l'élément de découplage au moins au nombre de un est un tourillon de découplage (27) et l'élément entraîneur est un tourillon entraîneur (55), lesquels s'étendent l'un vers l'autre axialement,
en ce que la partie de sortie (11 ; 110) présente au moins un segment (59) s'étendant de manière oblique,
en ce que le segment (59) s'étendant de manière oblique au moins au nombre de un exerce, lors de la rotation de la partie de sortie (11 ; 110) jusqu'à l'angle de découplage (Φ) à l'encontre du tourillon de découplage (27) au moins au nombre de un, une pression sur la pièce (3) à tourner et écarte la partie (3) à faire tourner et la partie de base (1) dans une direction axiale et découple, ce faisant, les deux éléments de couplage (17, 23),
en ce que lors de la poursuite de la rotation de la partie de sortie (11 ; 110) selon un angle (ϕ), où ϕ > Φ, le tourillon de découplage (27) au moins au nombre de un parvient en prise avec le tourillon entraîneur (55) au moins au nombre de un de sorte que la partie (3) à faire tourner est tournée par l'entraînement rotatif (7) électrique.

4. Unité de réglage à rotation électrique selon l'une quelconque des revendications précédentes, **caractérisée en ce que** la partie (3) à faire tourner et la partie de base (1) sont serrées l'une contre l'autre par l'intermédiaire d'un élément élastique, en particulier se présentant sous la forme d'un ressort hélicoïdal (63).

5. Unité de réglage à rotation électrique selon l'une quelconque des revendications précédentes, **caractérisée en ce que** les éléments de couplage (17, 23) sont des éléments d'un couplage à griffes.

6. Unité de réglage à rotation électrique selon l'une quelconque des revendications 2 à 4, **caractérisée en ce que** la partie de sortie (11 ; 110) est réalisée de manière à présenter une forme annulaire et présente un premier et un deuxième bord (51, 53), et **en ce que** le segment (59) s'étendant de manière oblique au moins au nombre de un et le tourillon entraîneur (55) au moins au nombre de un sont réalisés sur le premier bord (51).

7. Unité de réglage à rotation électrique selon la revendication 6, **caractérisée en ce que** la partie de sortie (11 ; 110) comprend une multitude de tourillons entraîneurs (55), de préférence trois, et une multitude de segments (59) s'étendant de manière oblique, et **en ce que** les segments (59) s'étendant de manière oblique sont réalisés entre les tourillons entraîneurs (55).

8. Unité de réglage à rotation électrique selon l'une quelconque des revendications 2 à 6, **caractérisée en ce qu'**une surface plateau (57) est prévue en partant de la position de remise à zéro devant le segment (59) s'étendant de manière oblique au moins au nombre de un.

9. Unité de réglage à rotation électrique selon l'une quelconque des revendications 2 à 7, **caractérisée en ce que** le segment (59) s'étendant de manière oblique au moins au nombre de un prend fin au niveau du tourillon entraîneur (55) au moins au nombre de un.

10. Unité de réglage à rotation électrique selon l'une quelconque des revendications précédentes, **caractérisée en ce que** l'entraînement rotatif (7) électrique comprend un engrenage, de préférence un engrenage planétaire et en particulier un engrenage planétaire Wolfrom (9), qui est relié à la partie de sortie (11 ; 110).

11. Unité de réglage à rotation électrique selon la revendication 10, **caractérisée en ce que** l'engrenage (9) n'est pas autobloquant.

12. Unité de réglage à rotation électrique selon l'une quelconque des revendications précédentes, **caractérisée en ce que** les éléments de découplage (17, 23) présentent essentiellement des dents de forme trapézoïdale et des renfoncements complémentaires de forme trapézoïdale.

13. Unité de réglage à rotation électrique selon l'une quelconque des revendications précédentes, **caractérisée en ce qu'**un angle de rotation (Ω) maximal de la partie (3) à faire tourner est fixé par une butée mécanique.

14. Unité de réglage à rotation électrique selon la revendication 13, **caractérisée en ce qu'**est prévu un dispositif de détection et de commande, au moyen duquel l'augmentation de courant de l'entraînement rotatif (7) électrique et, ce faisant, l'atteinte de la butée peuvent être détectés, et **en ce que** le dispositif de détection et de commande fait tourner la partie de sortie (11) pour la faire revenir dans sa position initiale jusqu'à ce que les deux éléments de couplage (17, 23) procèdent à nouveau à l'accouplement et que, ce faisant, la position de remise à zéro soit à nouveau atteinte.

15. Unité de réglage à rotation électrique selon l'une quelconque des revendications 1 à 10, **caractérisée en ce que** les éléments de couplage (17, 23) présentent des largeurs différentes dans une direction périphérique, et **en ce que** davantage d'éléments de couplage d'une première largeur (18, 24) et moins d'éléments de couplage d'une deuxième largeur (19, 25) sont prévus, **en ce que** les éléments de couplage (17, 23) peuvent, seulement après la rotation selon un angle donné (ψ), s'enclencher à nouveau en position de remise à zéro.

16. Unité de réglage à rotation électrique selon la revendication 15, **caractérisée en ce qu'**est prévu un dispositif de détection et de commande, qui, lorsque l'angle donné (ψ) est atteint, fait tourner la pièce de sortie (11) pour la faire revenir dans sa position initiale jusqu'à ce que les deux éléments de couplage (17, 23) procèdent à nouveau à l'accouplement et que, ce faisant, la position de remise à zéro, soit à nouveau atteinte.

17. Unité de réglage à rotation électrique selon la revendication 16, **caractérisée en ce que** l'atteinte de l'angle (ψ) donné est déterminée par le dispositif de détection et de commande du fait qu'une baisse de courant de l'entraînement rotatif (7) électrique est détectée.

18. Unité de réglage à rotation électrique selon l'une quelconque des revendications précédentes, **caractérisée en ce**
**qu'**un élément axial (5) est prévu,
en ce que l'élément axial (5) est monté de manière à pouvoir tourner dans la partie de base (1), et
en ce que la partie (5) à faire tourner est montée de manière à pouvoir tourner au niveau de l'élément axial (5).

19. Unité de réglage à rotation électrique selon l'une quelconque des revendications 2 à 18, **caractérisée en ce que** la partie (3) à faire tourner, la partie de base (1) et la partie de sotie (11 ; 110) présentent une section transversale essentiellement de forme circulaire.

20. Unité de réglage à rotation électrique selon l'une quelconque des revendications précédentes, **caractérisée en ce que** la partie de base (1) est réalisée de manière à présenter une forme tubulaire et présente une première et une seconde extrémité (13, 15) ouverte.

21. Unité de réglage à rotation électrique selon la revendication 20, **caractérisée en ce que** les premiers éléments de couplage (17) sont disposés dans la zone de bord de la première extrémité (13) ouverte.

22. Unité de réglage à rotation électrique selon la revendication 20 ou 21, **caractérisée en ce que** la partie de sortie (11 ; 110) et l'entraînement rotatif (7) électrique ou au moins la partie de sortie (11 ; 110) et l'engrenage (9) sont disposés à l'intérieur de la partie de base (1) de forme tubulaire.

23. Unité de réglage à rotation électrique selon l'une quelconque des revendications 2 à 22, **caractérisée en ce que** la partie (3) à faire tourner présente un premier élément rotatif (21) pourvu du tourillon de découplage (27) au moins au nombre de un, des premiers éléments de couplage (17) et de surfaces d'enclenchement (29) ainsi qu'un deuxième élément rotatif (33) pourvu de surfaces d'enclenchement complémentaires (31) associées.
